# EUROPEAN PATENT SPECIFICATION

(11) **EP 3 935 800 B1**
(45) Date of publication and mention of the grant of the patent: **17.07.2024**
(21) Application number: 20706544.2
(22) Date of filing: 03.03.2020
(51) Int. Cl.: H04L 41/14, H04L 43/062, H04L 9/40, H04L 67/125, H04W 12/00

(54) **NETWORK PROTECTION**
NETZWERKSCHUTZ
SÉCURITÉ DES RÉSEAUX

(30) Priority: 06.03.2019 EP 19161087; 06.03.2019 EP 19161094
(43) Date of publication of application: 12.01.2022
(73) Proprietor: British Telecommunications public limited company, London E1 8EE (GB)
(72) Inventor: WANG, Xiao-Si, London EC4V 5BT (GB); SAJJAD, Ali, London EC4V 5BT (GB)
(74) Representative: British Telecommunications public limited company Intellectual Property Department
(86) International application number: PCT/EP2020/055502
(87) International publication number: WO 2020/178265

(56) References cited:
- WO-A1-2018/184682
- WO-A1-2018/206965
- US-A1- 2015 163 121
- US-A1- 2017 279 838
- US-A1- 2018 013 776
- US-A1- 2018 109 496
- US-A1- 2018 191 676
- US-A1- 2018 316 555
- US-A1- 2019 014 048

## Description

The present invention relates to the protection of networks. In particular, the present invention relates to the protection of networks from the security risks associated with loT devices.

The Internet of Things (IoT) has been defined as "the network of physical devices, vehicles, buildings and other items with embedded sensors and actuators". Another definition of the loT according to The IEEE can be found in their report titled "Towards a definition of the Internet of Things (IoT)", revision 1 of which was published on 27 May 2015. Devices forming part of the loT (otherwise referred to as loT devices) are typically standard objects in which a computer system has been embedded (or attached) together with network connectivity and sensors and/or output devices (such as actuators) to enable data about the object to be collected and/or the object to be controlled. There has been a rapid growth in the popularity of loT devices causing a significant increase in both the range and overall number of loT devices that have been deployed into different networks. IoT devices can be found in a wide range of application areas, including, for example, farming, healthcare, infrastructure, logistics as well as in the home. For example, some of the kinds of loT devices which can currently be found in home environments include smart lights, speakers, fans, environmental monitors, smoke detectors, doorbells, locks, burglar alarms and security cameras, as well as the personal loT devices of the occupants, such as activity monitors, smart scales, blood pressure monitors, and so on. The network connectivity for these devices is typically provided by connecting them to a local network, such as the wireless network provided by a home router (either directly or indirectly through another device connected to the local network). However, other methods of providing network connectivity for loT devices are known, including, for example, by providing connectivity through a cellular network.

The computer systems that are embedded in (or attached to) an object to create an loT device are typically low-powered as a result of physical and/or financial limitations. This in turn places constraints on the computational ability of the embedded (or attached) computer system. Due to these computational constraints, loT devices are typically controlled by an application-specific operating system which is tailored toward the specific functions of the loT device. However, because of this, loT devices can present a security risk to any network that they are connected to. In particular, due to the application-specific nature of the operating system, it is generally not possible to use traditional security measures, such as anti-malware and firewall systems that can be applied to user endpoints such as computer, tablets and smart phones. Additionally, due to the customised nature of the application-specific operating system and other software running on an loT device, the likelihood of exploitable vulnerabilities being present in loT devices may be higher. Furthermore, due to the wide range of different types of models of loT devices that may be present in a network, as well as the range of different manufacturers responsible for maintaining the application-specific operating system and software of these devices, updating the loT devices to mitigate known security vulnerabilities can be difficult, time consuming and typically lags behind updates applied to more conventional computer systems, such as laptops, tablets and mobile phones, especially in home networks.

Looking to the future, it is expected that both the range and overall number of loT devices will continue to increase. This, combined with security weaknesses of loT devices, make loT devices an increasingly attractive target for attackers to seek to exploit either directly or via malware. Even if gaining the ability to retrieve data from and/or control the loT device itself is not of particular interest to an attacker (which may not necessarily be the case), the exploitation of vulnerabilities which may be more likely to be present in such devices can provide useful starting points from which to launch further attacks either inside or outside of the network to which the loT device is connected. As an example, an attacker may be able to exploit a vulnerable loT device to gather information passing through the network from other devices on the network, including from user computing devices such as laptops, tablets and smart phones. As a further example, an attacker may look to exploit (very) large numbers of vulnerable loT devices from across a large number of networks in order to launch a Distributed Denial-of-Service (DDoS) attack on a computer system accessible to those loT devices via the internet. This can cause problems not only for the targeted computer system, but also for the networks over which the DDoS attack traffic is carried due to the increased amount of traffic such attacks can generate.

US 2018/0191676 A1 discloses a method for managing loT devices by a security fabric that comprises collecting, by analyzing tier, data of Internet of Things (IoT) devices from a plurality of data sources, abstracting, by analyzing tier, profiled element baselines (PEBs) of loT devices from the data, wherein each PEB includes characteristics of loT devices; retrieving, by executing tier, the PEBs from the analyzing tier, wherein the executing tier is configured to control network traffic of loT devices of a private network; generating, by the executing tier, security policies for loT devices from PEBs of the loT devices; and controlling, by the executing tier, network traffic of the loT devices of the private network to comply with the security policies.

US 2015/0163121 A1 discloses that data is collected from a set of devices. The data is associated with the devices, mobile application programs (apps), web applications, users, or combinations of these. A norm is established using the collected data. The norm is compared with data collected from a particular device. If there is a deviation outside of a threshold deviation between the norm and the data collected from the particular device, a response is initiated.

US 2018/0109496 A1 discloses that a networking device in a local area network (LAN) establishes a virtual network overlay in the LAN to redirect traffic associated with a particular node in the LAN to a server for analysis. The networking device receives an indication from the server that at least a portion of the traffic associated with the particular node is trusted for local sending within the LAN and adjusts the virtual network overlay to locally send the trusted portion of the traffic associated with the particular node to one or more other nodes in the LAN without redirection to the server. The networking device collects characteristic information regarding the trusted portion of the traffic sent locally within the LAN via the adjusted virtual network overlay and sends the collected characteristic information to the server for analysis.

US 2018/0316555 A1 discloses that a supervisory device in a network maintains a plurality of node profiles for nodes in the network. The supervisory device receives, from a fog computing device in the network, node data associated with a particular node in the network. The supervisory device determines a node profile for the particular node based on the received node data and the maintained plurality of node profiles. The supervisory device causes installation of a fog computing application to the fog computing device based on the determined node profile for the particular node. The fog computing application is configured to process the node data associated with the particular node.

WO 2018/184682 A1 discloses that a method comprises: receiving a transmission at a first network node from one of a plurality of network nodes; allocating one of a plurality of classes to the transmission based on a physical layer transmission signature derived from the transmission; and performing an action on the transmission based on the class allocated to the transmission. In this way the receiving network node is able to detect a signature of the transmission received and then perform an action based on the signature of the received transmission. This gives the receiving network node greater control over the transmission received.

WO 2018/206965 A1 discloses methods, systems and computer readable media for protecting networks and devices from network security attack using physical communication layer characteristics.

Accordingly, it would be beneficial to mitigate these disadvantages. The invention is set out in the appended set of claims. Reference is also made in the following to other embodiments corresponding to examples deemed useful to understand the invention, even if they do not fall within the scope of the claims.

In a first aspect, there is provided a computer implemented method of protecting a network, the method comprising: gathering traffic data for the network; identifying a set of loT devices in the network based on output from a machine learning model for classifying IoT devices using features extracted from the traffic data that are indicative of an loT device, wherein the features comprise one or more general features of loT devices that are common to multiple types of loT device; and causing one or more predetermined actions to be taken in respect of the set of loT devices to protect the network.

Through the use of the machine learning model to classify loT devices, the present invention enables a set of loT devices in a network to be identified automatically from traffic data for the network, thereby enabling action to be taken to protect the network from those IoT devices without requiring any interaction from an administrator of the network. Furthermore, as a result, the threat posed by those loT devices to computer systems and other networks outside of the network (such as an Internet Service Provider's network) may also be reduced.

The method may be performed by a router device for the network. The traffic data may comprise data gathered from logs maintained by the router device for network services which are provided by the router device. The traffic data may further comprise data gathered from other computing devices of the network.

The traffic data may comprise indications of one or more, or all, of: successful network connections; network connection attempts; network connection terminations; packet filtering operations; network address translation operations; port translation operations; network session operations; layer 2 connections; access control operations; authentication operations; router advertisements; network boot operations; DNS requests and responses; and HTTP requests and responses.

The method may further comprise extracting one or more features that are indicative of an loT device from the traffic data. The one or more features may relate to operational parameters of the network traffic, such as one or more, or all, of: the number of packets of data transmitted by each device; the number of packets of data received by each device; the frequency with which traffic is transmitted by each device; the frequency with which traffic is received by each device; the average size of packets of data which are transmitted by each device; the average size of packets of data which are received by each device; the variance in the sizes of packets which are transmitted by each device; the variance in the sizes of packets which are received by each device; the ratio of traffic-in against traffic-out for each device; the number of endpoints with which each device communicates; the average duration of communication sessions for each device; the typical times when communication sessions occur for each device; and/or the times and duration that each device is online.

The method may further comprise generating the machine learning model using an unsupervised machine learning algorithm and a training set of data obtained from previously gathered traffic data for the network. The machine learning algorithm may comprise a shallow learning algorithm.

The method may further comprise communicating with another computer system to identify the set of loT devices. The method may receive an indication from the other computer system of one or more features that are indicative of an loT device to be extracted from the traffic data, extract the one or more features from the traffic data, provide the one or more features to the other computer system and receive an indication of the set of loT devices from the other computer system. The method may generate a profile of the computational abilities of the routing device and determine that processing to identify loT devices in the network is to be performed using the processing resources provided by the other computer system based, at least in part, on the profile.

The one or more predetermined actions may comprise placing the identified set of loT devices into a separate VLAN. The one or more predetermined actions may comprise performing targeted patching of the identified set of loT devices. The one or more predetermined actions may comprise comparing the set of loT devices to a previously identified set of loT devices and raising an alarm if there are any differences.

In a second aspect, there is provided a computer-implemented method for protecting a network comprising: obtaining a machine learning model for identifying loT devices in a network using features extracted from traffic data for that network that are indicative of an loT device; providing an indication to a routing device associated with a network of one or more features that are indicative of an loT device to be extracted from the traffic data, wherein the features comprise one or more general features of loT devices that are common to multiple types of loT device; receiving the one or more features from the routing device; identifying a set of loT devices in the network using the machine learning model and the one or more received features; and providing an indication of the set of loT devices to the routing device.

The machine learning model may be learnt from training data that is based on the traffic data from a plurality of networks. The machine learning algorithm may comprise an unsupervised learning algorithm. The machine learning algorithm may comprise a deep learning algorithm.

The one or more features relate to operational parameters of the network traffic, such as one or more, or all, of: the number of packets of data transmitted by each device; the number of packets of data received by each device; the frequency with which traffic is transmitted by each device; the frequency with which traffic is received by each device; the average size of packets of data which are transmitted by each device; the average size of packets of data which are received by each device; the variance in the sizes of packets which are transmitted by each device; the variance in the sizes of packets which are received by each device; the ratio of traffic-in against traffic-out for each device; the number of endpoints with which each device communicates; the average duration of communication sessions for each device; the typical times when communication sessions occur for each device; and/or the times and duration that each device is online.

In a third aspect, there is provided a computer system for protecting a network comprising a processor and a memory storing computer program code which, when executed by the processor cause the processor to perform a method according to the first or second aspects. The computer system may be arranged to function as a router device for the network.

In a fourth aspect, there is provided a system for protecting a network which comprises: a plurality of router devices, each router device being associated with a respective network and being configured to perform a method according to the first aspect to protect that network; and a computer system configured to perform a method according to the second aspect.

In a fifth aspect, there is provided a computer program which, when executed by one or more processors, is arranged to cause the processor to carry out the method set out above.

Embodiments of the present invention will now be described by way of example only, with reference to the accompanying drawings, in which:
Figure 1 is a block diagram of a computer system suitable for the operation of embodiments of the present invention;
Figure 2 is a block diagram of a computer network which embodiments of the invention may act to protect;
Figure 3 is a flowchart representation of a method of protecting a computer network in accordance with embodiments of the present invention;
Figure 4 is a flowchart representation of a method of protecting a computer network in accordance with some embodiments of the present invention;
Figure 5 is a block diagram showing a configuration of the network illustrated in figure 2;
Figure 6 is a flowchart representation of a method of protecting a computer network in accordance with some embodiments of the present invention;
Figure 7 is a flowchart representation of a method of protecting a computer network in accordance with some embodiments of the present invention;
Figure 8 is a flowchart representation of a method of protecting a computer network in accordance with some embodiments of the present invention;
Figure 9 is a flowchart representation of steps taken by a device performing the method illustrated in figure 6 to communicate with another computer system to identify a set of loT devices in a network in accordance with some embodiments of the present invention;
Figure 10 is a flowchart representation of the corresponding steps that are taken by the other computer system performing the method illustrated in figure 7, in accordance with some embodiments of the present invention;
Figure 11 is a flowchart representation of the steps taken by a device performing the method illustrated in figure 6 to communicate with another computer system to identify a set of loT devices in a network in accordance with some embodiments of the present invention; and
Figure 12 is a flowchart representation of the corresponding steps that are taken by the other computer system performing the method illustrated in figure 7, in accordance with some embodiments of the present invention.

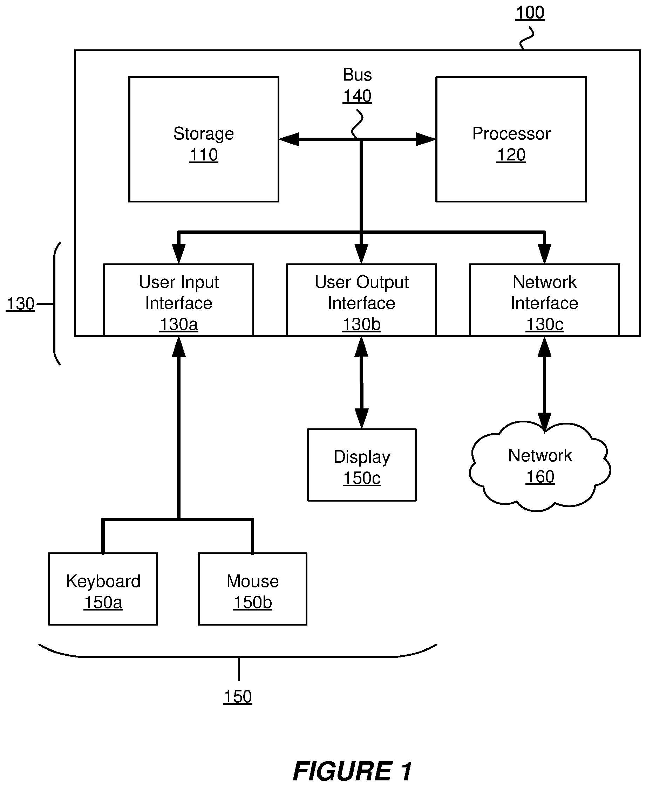

Figure 1 is a block diagram of a computer system (or computing device) suitable for the operation of embodiments of the present invention. The system 100 comprises: a storage 110, a processor 120 and one or more input/output interfaces 130, which are all communicatively linked over one or more communication buses 140.

The storage 110 can be any volatile read/write storage device such as a random access memory (RAM) or a non-volatile storage device such as a hard disk drive, magnetic disc, optical disc, ROM and so on. The storage 110 can be formed as a hierarchy of a plurality of different storage devices, including both volatile and non-volatile storage devices, with the different storage devices in the hierarchy providing differing capacities and response times, as is well known in the art.

The processor 120 may be any processing unit, such as central processing unit (CPU) which is suitable for executing one or more computer programs (or software or instructions or code). These computer programs may be stored in the storage 110. During operation of the system 100, the computer programs may be provided from the storage 110 to the processor 120 via the one or more buses 140 for execution. One or more of the stored computer programs are computer programs which, when executed by the processor 120, cause the processor 120 to carry out a method according to an embodiment of the invention (and so configure the system 100 to be a system 100 according to an embodiment of the invention).

The one or more input/output (I/O) interfaces 130 provide interfaces to devices 150 for the input or output of data, or for both the input and output of data. The one or more interfaces 130 may include one or more user input interfaces 130a for connecting to devices which can receive input from a user of the system 100, such as a keyboard 150a or mouse 150b. The one or more interfaces 130 may include one or more user output interfaces 130b which can provide an output to the user of the system 100, such as a display 150c or monitor. In some cases a single device, such as a touch screen display, may be connected to both an input interface 130a and an output interface 130b and used both to receive input from the user of the system 100 and provide output to the user of the system 100. The one or more interfaces 130 may include one or more network interfaces 130c which enable the computer system to communicate with other computer systems via one or more networks 160. Other interfaces (not shown) may also be present in the computer system. Indeed, there are many other types of devices (not shown) which may be used with system 100 as is well known in the art. For example, the system 100 can include interfaces to various sensors and actuators which enable it to monitor and/or interact with its environment.

It will be appreciated that the architecture of the system 100 illustrated in figure 1 and described above is merely exemplary and that other computer systems 100 with different architectures (such as those having fewer components, additional components and/or alternative components to those shown in figure 1) may be used in embodiments of the invention. As examples, the computer system 100 could comprise one or more of: a personal computer; a laptop; a tablet; a mobile telephone (or smartphone); a television set (or set top box); a games console; an Internet of Things (IoT) device; a server; a network appliance, such as a router, firewall, intrusion detection system (IDS) or intrusion prevention system (IPS); or indeed any other computing device. Accordingly, the I/O interfaces that are present in computer system 100 and the devices 150 that interface with the computer system 100 can vary significantly depending on its type and may include I/O interfaces and devices not explicitly mentioned above, as would be apparent to the skilled person. For example, an Internet of Things (IoT) device might have a network interface 130c, but no user input interface 130a or user output interface 130b (although, of course, such interfaces may be present in some loT devices) and might additionally have an I/O interface 130 to one or more sensor and/or actuator devices.

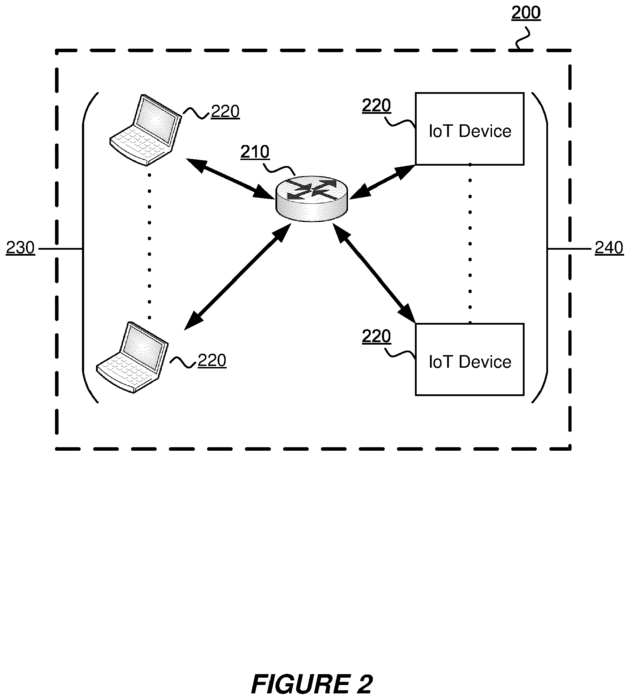

Figure 2 is a block diagram of a computer network 200 which embodiments of the invention may act to protect. The network 200 comprises a router device 210 and one or more computer systems (or devices) 220 communicatively coupled to the router device.

The router device 210 manages the flow of network traffic between the computer systems 220 within the network 200. In some embodiments, the router device 210 enables the computer systems 220 within the network 200 to communicate with other networks (not shown in figure 2), including, for example, the internet. Conceptually, network 200 may be considered to be a part of a larger network. However, in other embodiments, the network 200 is an isolated network and the router device 210 does not enable computer systems 220 within the network 200 to communicate with other networks.

The computer systems 220 are communicatively coupled to the router device 210 via any suitable data links. In some embodiments, the router device 210 is communicatively coupled to the computer systems 220 via data links established over cable media, such as wires or optic cables. In some embodiments, the router device 210 is communicatively coupled to the computer systems 220 via data links established over wireless media, such as via WiFi, LiFi or Cellular communication. In some embodiments, the router device 210 is communicatively coupled to the computer systems 220 via data links established over more than one media, with each computer system 220 using a respective media to communicate with the router device 210. In some embodiments, some of the computer systems 220 may be connected via a mesh network, such computer systems 220 thereby communicating with the router device indirectly via another one of the computer systems 220 in the mesh network with a direct communication link to the router device 210.

The computer systems 220 in the network 200 may be any type of computer system 100 as described above in conjunction with figure 1. Generally, for the purposes of embodiments of this invention, the computer systems 220 may be considered to be either loT devices 230 or non-loT devices 240. As will be appreciated, the network 200 illustrated in figure 2 is merely exemplary and embodiments the invention may be used with networks having vastly different structures and numbers of devices to those illustrated in figure 2.

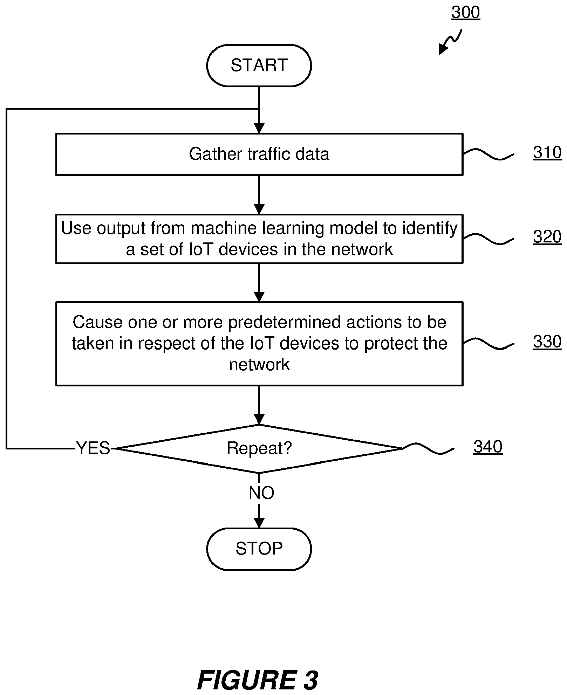

Figure 3 is a flowchart representation of a method 300 of protecting a computer network, such as network 200, in accordance with embodiments of the present invention.

In an embodiment, the method 300 is performed by a router device for the network 200, such as router device 210. Since router devices are present in almost all networks, the use of a router device 210 to perform the method 300 allows the method 300 to be performed without requiring additional devices to be installed in the network 200. This can reduce the costs of implementing the invention, as well as reducing the complexity and time required to set up a network which is protected by method 300. Additionally, the router device 210 may be better placed to take action to mitigate the risks posed by the loT devices (due to its role of managing the traffic in the network) thereby simplifying the implementation of the method 300. Of course, in other embodiments, the method 300 may be performed by another computer system 220 within the network 200, either as a separate device dedicated to protecting the network 200 using method 300 or by any other computer system 220 in the network 200 which may perform other functions in addition to the method 300.

At an operation 310, the method 300 gathers traffic data from the network 200.

The traffic data represents the traffic (or data flows or communication) that is occurring in the network 200. That is to say, the traffic data represents the traffic flowing to each computer system 220, from each computer system 220 or both. The traffic data may include traffic flowing between computer systems 220 within the network 200 as well as traffic flowing between computer systems 220 within the network 200 and those outside the network (in embodiments where the router 210 enables the computer systems 220 within the network 200 to communicate with other networks).

Where the method 300 is performed by a router device 210 for the network 200, at least some of the traffic data that is gathered may be gathered from logs that are maintained by the router device for network services which are provided by the router device. As will be appreciated, router devices 210 commonly provide additional network services that may be used by the network 200 to which they are connected, especially those router devices 210 that are intended for use in a home environment. As examples, such router devices 210 may also provide firewall and DHCP services to the network 200 (although any type and combination of additional network services may be used and will typically be different for different router devices). The logs for such network services typically include data which represents the traffic occurring in the network 200 and as such are a good source of traffic data for the network 200. Examples of the types of logs that may be available on a typical router device 210 include:
- Dropbear logs, which store the attempts and results of users and devices connecting to or disconnecting from the router;
- Netfilter logs, which store the operations for packet filtering, network address translation, port translation, network sessions and so on;
- pppd logs, which store the details of layer 2 connections and operations taking place in the router, including various access control and authentication operations;
- dnsmasq logs, which store the details of router advertisement and network boot related traffic, in addition to the details of the DNS requests are responses that traverse the router; and
- squid logs, which store details of the HTTP request and responses received by a router, including information about remote hosts, requested URLs, status of replies and so on.

It will of course be appreciated that the names of the logs and the type of traffic data they provide may vary depending on the software used in a particular router and that fewer, additional and/or different logs may be used in other embodiments to gather traffic data for the network from logs within the router device 210 accordingly.

Additionally, in some embodiments the router device 300 may gather traffic data from other computing devices 220 within the network 200. In particular, other computer systems 220 may provide network services for the network 200 and can provide data representing the traffic occurring in the network 200. For example, a separate computer system 220 may be used to provide a firewall service for the network 200, in which case, logs may be retrieved from that system 220 and used as traffic data for the network 200.

In a similar manner to that discussed above, where the method 300 is performed by a device 220 other than the router device 210, the traffic data may be gathered from logs maintained locally on that device (for example, from logs relating to network services provided by that device 220). Additionally or alternatively, the traffic data may be gathered from other computer systems 220 on the network 200.

Regardless of where the traffic data is collected from, in embodiments the traffic data comprises any combination of one or more, or all, of: successful network connections; network connection attempts; network connection terminations; packet filtering operations; network address translation operations; port translation operations; network session operations; layer 2 connections; access control operations; authentication operations; router advertisements; network boot operations; DNS requests and responses; and/or HTTP requests and responses. Although, of course, in other embodiments additional and/or different types of traffic data may be gathered.

Having gathered traffic data from the network 200 at operation 310, the method 300 proceeds to an operation 320.

At operation 320, the method 300 uses the output from a machine learning model to identify a set of loT devices 240 in the network 200.

The machine learning model is a model that is the outcome from the training of a machine learning algorithm on a training set (or test set) of traffic data. This training process produces a trained model (the machine learning model), which is able to classify a computer system 220 as being either an loT device 240 or a non-loT device 230 based on one or more features extracted from the traffic data. Due to the fact that loT devices typically operate largely autonomously and are application-specific, their behaviour tends to differ from that of other computer systems. There are therefore numerous features that may be extracted from traffic data which are likely to distinguish an loT device 240 from a non-loT device 230. As examples, the regularity (or frequency) with which traffic is transmitted (and/or received), the average size and/or variance in sizes of packets of data which are transmitted (and/or received), the average duration of communication sessions, the typical times and the time period over which communication sessions occur, the number of endpoints with which communication takes place, the ratio of traffic-in against traffic-out, source and destination IP addresses, numbers of packets, timestamps, device online durations, text and so on may all differ in distinct ways for loT devices as compared to non-loT devices 230.

Those skilled in the art will appreciate that these features of the traffic data are merely provided as examples and that other features of the traffic data which can distinguish loT devices 240 from non-loT devices 230 may be used instead (or in addition). Whilst the characteristics of specific loT devices 240, such as a particular model of loT device made by a particular manufacturer, are likely to differ in some ways from those of other loT devices 240, it will be appreciated that in other aspects there are commonalities which are shared between large numbers of loT devices. It is therefore possible for a machine learning model to be trained to identify loT devices generally based on these underlying common features which are shared between large numbers of loT devices and which are distinct from the characteristics of non-loT devices. By using a machine learning model trained to distinguish between loT devices and non-loT devices using such features at a general level (rather than identifying specific models of loT device), the method 200 is more adaptable and is more likely to be able to continue to operate effectively when faced with new kinds of loT devices which were not included in the training set upon which the machine learning model was trained.

As will be known by those skilled in the art, two types of machine learning algorithms are supervised learning algorithms and unsupervised learning algorithms. Supervised learning algorithms require training to be performed using a set of labelled training (or test) data. That is to say, for each training data input, the algorithm needs to know whether that training data input represents an loT device or a non-loT device (in the context of this invention). Examples of supervised learning algorithms include decision trees, random forests, k nearest neighbour, linear support vector classifiers (SVC), logistic regression, naive Bayes, neural networks and support vector regression (SVR). Unsupervised learning algorithms do not require the data that they are trained on to be labelled. Examples of unsupervised learning algorithms include k-means clustering, n nearest neighbour, dimensionality reduction, neural networks, principal component analysis and singular value decomposition and support vector machines. Whilst embodiments of the invention may make use of any suitable supervised or unsupervised learning algorithm, as known to those skilled in the art, preferably unsupervised learning algorithms are used to create the machine learning model. In particular, given the large numbers of different types of loT devices, creating a labelled training set of data to cover those loT devices, as required for supervised learning algorithms, is laborious, time consuming and costly. Additionally, supervised learning algorithms are more prone to overfitting the model that they produce to the specific types of loT devices represented in the training set of data. This means that the model that is produced by supervised learning algorithms may be less adaptable. That is to say, the model may be less likely to detect new types of loT devices which were not represented in the training set of data. Therefore, given the rate at which new types of loT devices are being created an unsupervised learning algorithm is preferred as such algorithms may be more adaptable and are, in any case, easier to retain to account for new types of loT devices as they do not require labelled training data to be obtained.

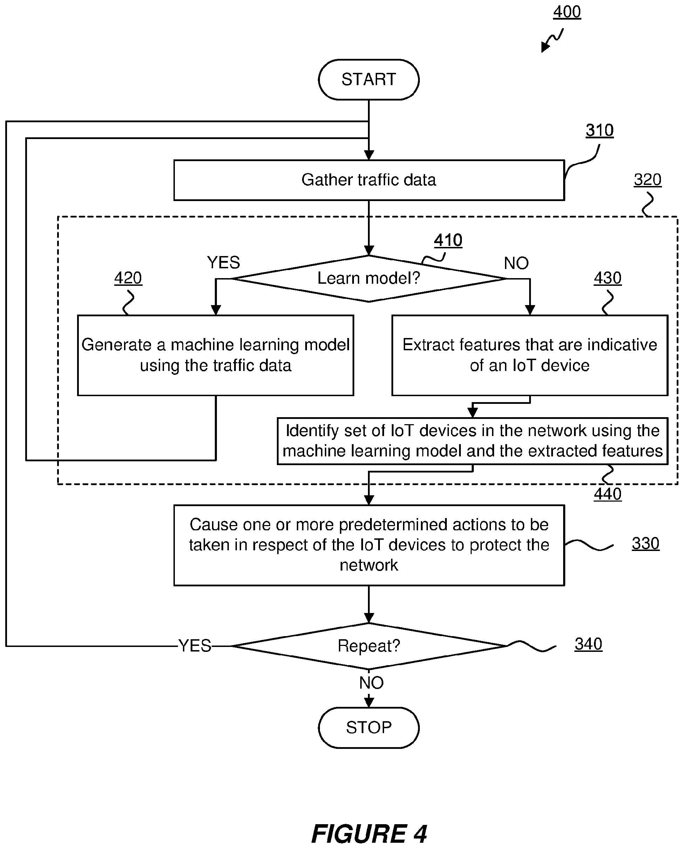

There are a variety of different ways in which the output from the machine learning model may be obtained by operation 320. These are discussed further below in conjunction with the discussion of the embodiments illustrated in figures 4-9. However, in general, at operation 320, a machine learning model is used, either directly or indirectly, to classify each computer system 220 (or a subset thereof) in the network 200 as being either an loT device 240 or a non loT device 230 and, in so doing, a set of loT devices 240 is identified within the network 200. Having identified a set of loT devices 240 at operation 320, the method precedes to an operation 330.

At operation 330, the method 300 causes one or more predetermined actions to be taken in respect of the set of loT devices to protect the network.

As discussed above, loT devices typically are more likely to present a security risk to any network that they are connected to. Therefore, by identifying a set of loT devices 240 in the network at operation 320, the method 300 can take various measures to mitigate the risk presented by these devices and, in so doing, protect the network 200 from such risks.

In some embodiments, the network 200 is protected from the risks presented by the loT devices 240 by placing the identified set of loT devices 240 into a separate Virtual Local Area Network (VLAN). That is to say, the predetermined actions may comprise placing the identified set of loT devices into a VLAN which is separate from any non-loT devices 230 in the network 200. Any devices which have not yet been classified can be treated in any appropriate manner. For example, a permissive-based approach can assume that unclassified devices are non-loT devices and allow them to be in the same VLANs as other non-loT devices. However, a more restrictive approach can place them the unclassified devices into their own "unclassified" VLAN or else place them in the same VLAN as the classified loT devices.

As will be understood by those skilled in the art, although different VLANs exist on the same underlying physical network (or LAN) they act as though they are completely separate networks. This means that the traffic data on each VLAN is separated (or segregated) from the traffic data on any other VLAN. The router device 210 can be configured to apply different rules to the devices in different VLANs. For example, the devices in one VLAN, such as a VLAN containing the non-loT devices 230, may be allowed to initiate connections to devices in another VLAN, such as a VLAN containing the loT devices 240. Meanwhile, devices in the other VLAN containing the loT devices 240 may not be allowed to initiate connections to devices in the VLAN containing the non-loT devices 230. Similarly, where the router device 210 enables computer systems 220 in the network 200 to communicate with another network (or a wider network, or the internet), different rules can be applied to the devices 220 in one VLAN from those in another VLAN. For example, devices in a VLAN containing non-loT devices 230 may be allowed to make any number of connections to any number of computer systems in the other network. Meanwhile, devices in a VLAN containing loT devices 240 may be more restricted in the connections that they are permitted to make. Therefore, by placing the loT devices 240 into a separate VLAN from the non-loT devices 230, the traffic of the non-loT devices 230 is not accessible to the loT devices 240. This eliminates (or at least reduces) the risk of an attacker being able to exploit a vulnerable loT device to gather information passing through the network from the non-loT devices on the network. Furthermore, due to the restrictions that may be imposed by the router device 210 on the communications of the devices 220 in the VLAN containing loT devices 240, the possibility for malware to spread or for attackers to launch attacks (such as DDoS attacks) on other computer systems, either inside or outside of the network 200, may be reduced.

In some embodiments, the predetermined actions that are taken in respect of the identified set of loT devices 240 includes performing targeted patching of the identified devices. In some embodiments, any loT devices 240 that are identified as requiring a patch to address a vulnerability may be quarantined prior to the patch being applied (for example, by placing them into a separate VLAN until the patch is applied).

In some embodiments, the predetermined actions that are taken in respect of the identified set of loT devices 240 includes comparing the set of loT devices to a previously identified set of loT devices and raising an alarm (or notification or alert) if there are any differences. For example, where the method 300 is performed periodically, the previous set of loT devices may be the set of loT devices identified in the previous iteration of the method 300. In some embodiments, the composition of the set of loT devices 240 may be considered to have changed compared to the previously identified set of loT devices if a new device which was either not previously in the network, or which was not previously classified as being an loT device (for example, due to using an older version of a machine learning model), has been classified as being an loT device. Additionally or alternatively, the composition of the set of loT devices 240 may be considered to have changed compared to the previously identified set of loT devices if a device which was previously classified as being an loT device is either no longer present in the network or is no longer classified as being an loT device. In some embodiments, the alarm which is raised identifies the device(s) which have changed (i.e. the alarm identifies the new and/or removed loT devices).

Having caused one or more predetermined actions to be taken in respect of the set of loT devices to protect the network at operation 330, the method 300 proceeds to operation 340.

At operation 340, the method 300 determines whether it should repeat operations 310-330. That is to say, in some embodiments, the method 300 is performed iteratively whilst in others it is not. By performing the method 300 iteratively, the network 200 can be periodically (or sporadically) monitored by waiting until an appropriate time to repeat the method. For example, operations 310-330 could be repeated at regular intervals, such as every minute, hour, day, week and so on (or indeed any time period in between). Alternatively the method 300 may be performed in response to another event. For example, when a new computer system 220 is detected in the network 200 (such as, for example, when a new DHCP lease is requested). Similarly, the two approaches may be combined in some embodiments to allow both regular and responsive monitoring of the network. By performing the method 300 iteratively in any of these ways, the method 300 can detect any additional loT devices 240 that have been connected to (or removed from) the network 200 since the previous iteration. Additionally, in embodiments where the machine learning model may be updated (or re-trained) based on subsequently collected traffic data (as discussed further below), subsequent iterations of the method 300 may use the updated model to identify any loT devices which may have been incorrectly classified as non-loT devices by the previous model (or indeed to identify any non-loT devices which may have been incorrectly classified as loT devices). Where the method is performed iteratively, when it is determined that operations 310-330 should be repeated, the method 300 re-iterates back to operation 310. Of course, in other embodiments, the method may not be performed iteratively, in which case the method 300 ends.

Through the use of a machine learning model to identify a set of loT devices in the network based on traffic data, the method 300 enables action to be taken to protect a network 200 from the risks associated with loT devices 240, without requiring explicit configuration as to which devices are the loT devices and without requiring any modifications being made to the devices 220 operating in the network 200.

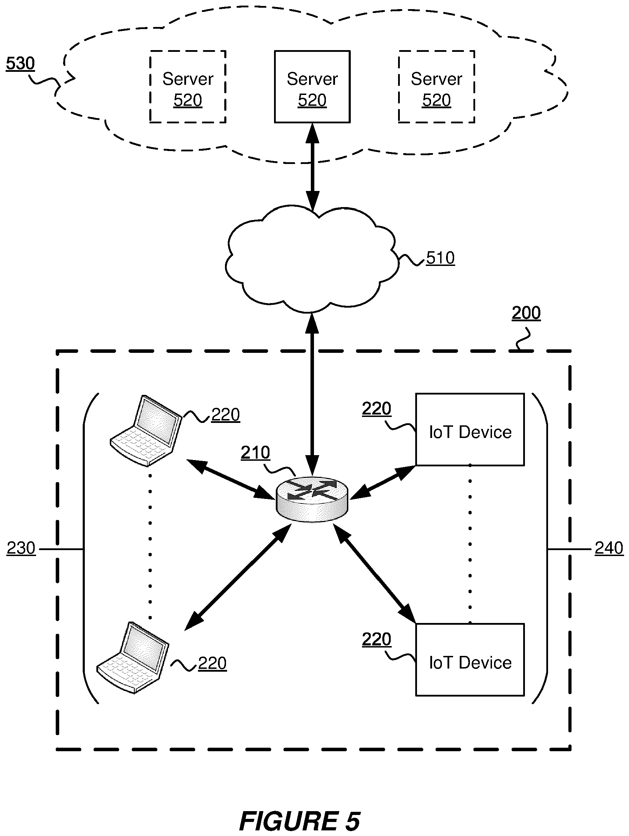

As discussed above, there are a variety of different ways in which the output from the machine learning model may be obtained by operation 320 of method 300. These will now be discussed further below in conjunction with the discussion of the embodiments illustrated in figures 4-12. In general, the following embodiments take one of two different approaches to obtain the output from the machine learning model. In a first approach, as discussed below in conjunction with figure 4, the method 300 is performed entirely by an individual device, such as router device 210, within the network 200. In a second approach, as discussed below in conjunction with figures 5-12, the method 300 is performed collaboratively by two or more devices.

Figure 4 is a flowchart representation of a method 400 of protecting a computer network, such as network 200, in accordance with some embodiments of the present invention. The method 400 is the same as that described above in relation to figure 3, except that the second operation 320 has been expanded on to discuss one of the ways in which the output from the machine learning model may be obtained, in accordance with some embodiments of the present invention.

As for the method 300 described above in relation to figure 3, at an operation 310, the method 400 gathers traffic data from the network 200. The method 400 then proceeds to an operation 410.

At operation 410, the method 400 determines whether the machine learning model needs to be learned (or re-learned).

If the model needs to be learned (or re-learned), the method 400 proceeds to an operation 420. This may be the case, for example, during an initial run of method 400 on a particular computer system 100, such as router device 220, whereby no model that was learnt by a previous run of method 400 may be available for use. Similarly, it may be determined that a model that is available for use, for example from a previous run of method 400, is sufficiently old that it should be updated (i.e. re-learned).

At operation 420, the method 400 generates a machine learning model using a machine learning algorithm and a training set of data derived from the set of data gathered at operation 310. The machine learning model is generated using an unsupervised learning algorithm such as any of those listed above. In order to train the unsupervised learning algorithm a set of features is extracted from the training set of data and used as input from the model. In some embodiments, the features that are extracted are predetermined. In other embodiments the features are determined through the use of feature learning techniques (otherwise referred to as automated feature engineering, learning feature engineering or deep feature synthesis). In such embodiments, any suitable method of feature learning known in the art may be used as will be apparent to those skilled in the art including, for example, the use of clustering methods and/or principal component analysis and/or deep learning using recurrent neural networks. The extraction of the features from the traffic data creates a locally processable training set, for example by representing various features of the traffic data as numerical values which may be normalised or scaled into useful ranges (such as an interval from -1 to 1) for more efficient processing (in terms of hardware/network resources).

In some embodiments, the machine learning algorithm is a so-called shallow learning algorithm (also referred to as a lightweight learning algorithm). Due to the lower computational power required to train a shallow learning algorithm (compared to deep learning algorithms) the use of a shallow learning algorithm enables the method 400 to be performed on lower-powered computer systems, such as some router devices (especially those typically found in a home network environment), which have less computational, storage and/or I/O resources available for performing the algorithm (and may not therefore be able to perform a more deep or heavyweight learning algorithm). Examples of shallow learning algorithms which may be used include logistic or linear regression or support vector machines, although any suitable light-weight machine learning algorithm may be used.

Having generated a machine learning model using a training set of data derived from the set of data gathered at operation 310, the method 400 returns to operation 310 to gather more traffic data upon which to operate the model.

If, at operation 410, it is determined that the model does not need to be learned (or re-learned), the method 400 proceeds to an operation 430. This may be the case, for example, where a machine learning model that was learnt during a previous run of method 400 is available for use and is considered to be sufficiently current that it does not need to be updated. In some embodiments, the machine learning model that is to be used is not generated by the computer system 100 which is performing the method 400 (such as router device 220). For example, the machine learning model may be learnt on a separate computer system and supplied pre-stored in a storage 110 of the computer system 100 that is to run the method 400. In such embodiments, the machine learning model is simply retrieved from the storage 110.

At operation 430, the method 400 extracts one or more features that are indicative of an loT device from the traffic data as required for the model. As will be understood by those skilled in the art, the set of features that are extracted in order to use the model at operation 430 may be different from the features that were extracted in order to train the model during operation 420. In particular, during training of the model, various features may be discarded as being less suitable for distinguishing between the devices in the network. The features may relate to operational parameters of the network traffic. That is to say, they may relate to the properties of the network traffic, rather than its content. As examples, the types of features that may be extracted at operation include the regularity (or frequency) with which traffic is transmitted (and/or received) from each computer system 220 in the network, the average size and/or variance in sizes of packets of data which are transmitted (and/or received) from each computer system 220 in the network, the average duration of communication sessions from each computer system 220 in the network, the typical times and the time period over which communication sessions occur from each computer system 220 in the network, the number of endpoints with which communication takes place for each computer system 220 in the network, the ratio of traffic in against traffic out for each computer system 220. However, those skilled in the art would understand that these are merely exemplary and that different combinations and different features may be used in other embodiments. Having extracted the features needed to use the model, the method 400 proceeds to an operation 440.

At operation 440, the method 400 inputs the features extracted at operation 430 into the machine learning model. The output from using the machine learning model with the extracted features is a classification, for each of the computer systems 220 for which features were extracted from the traffic data, as to whether that computer system 220 is an loT device or not. Using this output, at operation 440, the method identifies a set of loT devices in the network.

As for the method 300 described above in relation to figure 3, at operation 330, the method 400 causes one or more predetermined actions to be taken in respect of the loT devices to protect the network. The method 400 then proceeds to operation 340.

As for the method 300 described above in relation to figure 3, at operation 340, the method 400 determines whether it should repeat the operations 310, 410, 420, 430, 440, 330, and 340 and either re-iterates or ends accordingly.

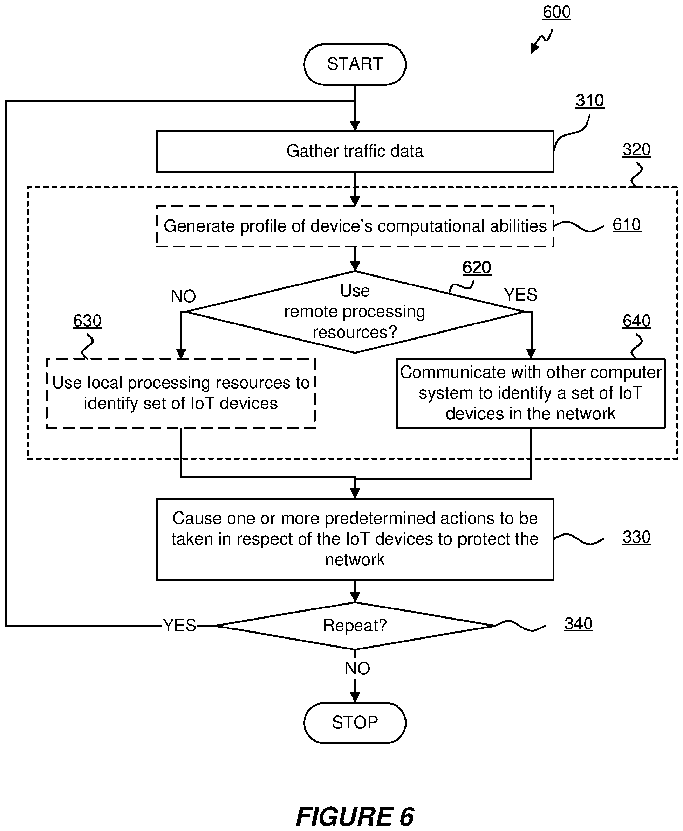

Figure 5 is a block diagram showing a configuration of the network 200 illustrated in figure 2 in which the router device 210 enables computer systems 220 to communicate with computer systems outside of the network 200 via another network 510, such as the internet. In the embodiments that are discussed below in conjunction with figures 6-12, a computer system 220, such as router device 210, communicates with another computer system to carry out operation 320 of the method 300 described in conjunction with figure 3. In these embodiments, the other computer system is generally used to provide computational resources to assist in the use of the machine learning models to classify devices 220 in the network 200 as being either loT devices 240 or non-loT devices 230. By using the computational resources of the other computer system, the device that is performing the method 300 may be able to make use of more processing power, memory and/or bandwidth than is available locally. As shown in figure 5, in some embodiments, this computational resource is provided by a server 520 that is accessible via the other network 510. In some such embodiments, the server 520 forms part of a cloud service 530 which comprises a plurality of servers 520 each configured to provide computational resources for performing the same functionality, such as the functionality required to use the machine learning models to classify devices 220 in the network 200. As an example, such a cloud service 230 may be operated by an internet service provider (ISP) to provide computational support to router devices 210 that are provided by the ISP to their customers to allow their customers to access the internet. In yet further embodiments (not shown in figure 5), the other computer system that is used to provide computational resources to assist in the use of the machine learning models to classify devices 220 in the network 200 may reside within the network 200 itself. For example, in a larger network, an internal server (or cloud) may operate to provide computational support to router devices for classifying other devices within the network. By using the computation resources of another computer system to carry out operation 320 of the method 300 described in conjunction with figure 3, the following embodiments enable the invention to be performed on lower-powered computing devices, such as the typical routing device 210 that may be found in a home environment, for example.

Figure 6 is a flowchart representation of a method 600 of protecting a computer network such as network 200, in accordance with some embodiments of the present invention. The method 600 is the same as that described above in relation to figure 3, except that the second operation 320 has been expanded on to discuss another of the ways in which the output from the machine learning model may be obtained, in accordance with some embodiments of the present invention.

As for the method 300 described above in relation to figure 3, at an operation 310, the method 600 gathers traffic data from the network 200. In some embodiments, the method 600 then proceeds to an optional operation 610. In other embodiments, the method 600 proceeds directly to an operation 620.

At optional operation 610, the method 600 generates a profile of the computational abilities of the system 220 that is performing the method 600, such as routing device 210. The profile includes various metrics of the system, including for example, regarding its processing, memory, I/O and throughput capabilities. In some embodiments, this profile is generated by actively probing (or testing) the capabilities of the system 220. In other embodiments, the profile is generated by retrieving stored data indicating the system's capabilities. In yet further embodiments, a combination of both probing and retrieval of stored data are employed. Having generated the profile, the method 600 proceeds to operation 620.

At operation 620, the method 600 determines whether remote processing (or server-side or cloud-side) resources should be used to assist in the identification of loT devices 240 in the network 200. As discussed above, the remote processing resources are provided by another computer system, different from the system performing the method 600. In some embodiments the other computer system is a server 520 or cloud service 530 accessible to the system performing the method 600 via another network 510, such as the internet.

In embodiments where optional operation 610 is performed to generate a profile of the computational abilities of the system 220 that is performing the method 600, the determination as to whether remote processing resources should be used, may be based on the profile. That is to say, in some embodiments, it is determined at operation 610 whether the device 220 that is performing the method 600 is able to classify the devices 220 in the network 200 solely using local (or edge-side) resources and if not, determine that remote processing resources should be used. As an example, in some embodiments, the profile comprises a score indicating the computational abilities for the device 220 that is performing the method 600 and the score is compared to a predetermined threshold to determine whether remote processing should be used. Alternatively or additionally, in such embodiments, the operation 610 may use the profile to assess whether there is sufficient networking capacity to be able to upload the amount of data required to utilize remote processing resources and, if not, determine that remote processing resources should not be used.

Naturally, in these and other embodiments, a locally stored value (i.e. indicating a user preference or device setting) may be used as part of the determination to use remote processing resources. For example, if a user preference is stored specifying that remote processing resources should not be used, the method 600 at operation 620 can determine that remote processing resources should not be used.

If it is determined, at operation 620, that remote processing resources should not be used, in some embodiments the method 600 may instead, at an optional operation 630 attempt to use local processing resources to identify the set of loT devices by switching to use the method 400 described in conjunction with figure 4. In some embodiments, where a profile of the device's computational abilities has been generated, the method 600 may first determine whether the device's computational abilities are sufficient to perform the method 400 locally before switching to use that method. If the device's local computation abilities are sufficient, the method 400 is used. Otherwise, the method 600 ends. In other embodiments, the method 600 may simply end following a determination that remote processing resources should not be used at operation 620, without attempting to perform local processing.

If it is determined, at operation 620, that remote processing resources should be used, the method 600 proceeds to an operation 640.

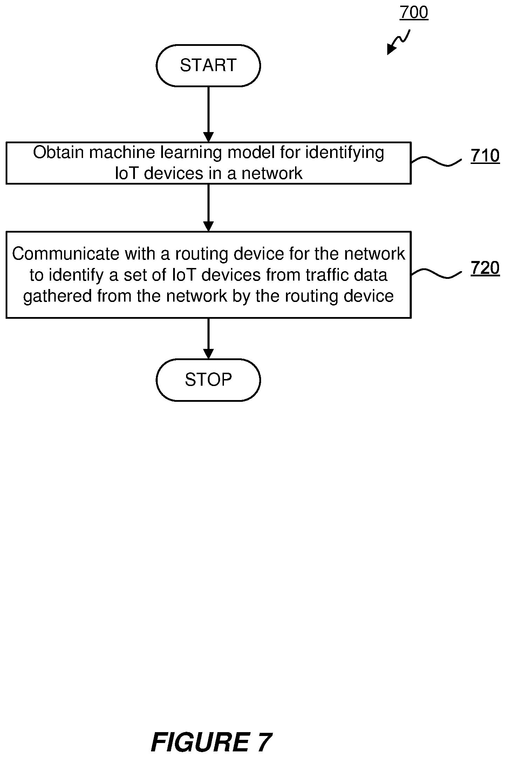

At operation 640, the method 600 communicates with the other computer system, such as server 520, to identify a set of loT devices 240 in the network 200. There are a variety of different ways in which the set of loT devices 240 may be identified by communicating with the other computer system. These are discussed further below in conjunction with the discussion of the embodiments illustrated in figures 7-9. Having identified a set of loT devices 240 collaboratively with the other computer system, the method 600 proceeds to operation 330.

As for the method 300 described above in relation to figure 3, at operation 330, the method 600 causes one or more predetermined actions to be taken in respect of the loT devices to protect the network. The method 600 then proceeds to operation 340.

As for the method 300 described above in relation to figure 3, at operation 340, the method 600 determines whether it should repeat the operations 310, 610, 620, 630, 640, 330 and 340 and either re-iterates or ends accordingly.

Figure 7 is a flowchart representation of a corresponding method 700 of protecting a computer network, such as network 200, in accordance with some embodiments of the present invention. This method 700 is the method that is performed by the other computer system with which a device performing the method 600 described in conjunction with figure 6 communicates to collaboratively identify loT devices 240 in the network 200. For example, in some embodiments, this method 700 is performed by a server 520 (or cloud service 530) which is accessible via another network, such as the internet, by a router device 210 performing the method 600 to protect network 200. Although figure 5 only illustrates a single router device 210 for a single network 200 communicating with the server 520 (or cloud service 530), it will be appreciated that in some embodiments the same server 520 (or cloud service 530) is used to communicate with the respective router devices 210 (or any other device operating to protect the network 200 in accordance with embodiments of the invention) for a plurality of networks to work collaboratively with those router devices to identify the IoT devices 240 in each respective network 200.

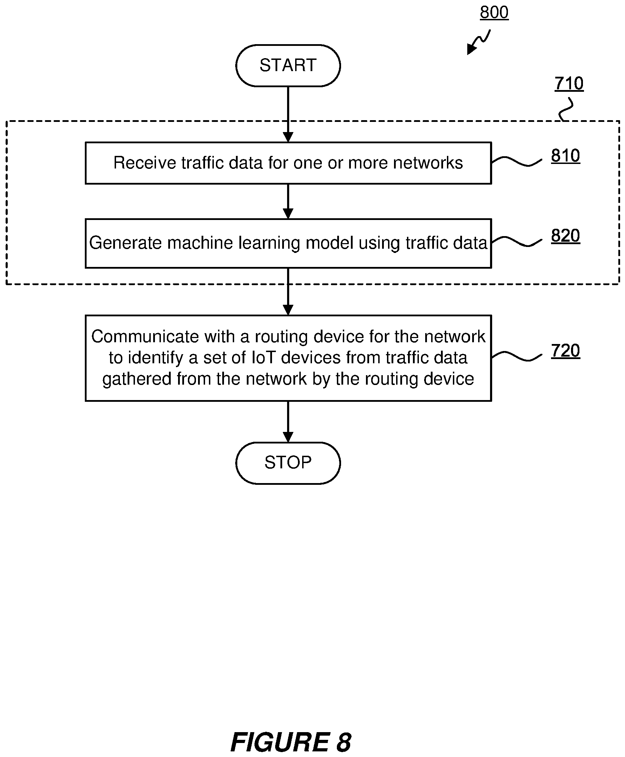

At an operation 710, the method 700 obtains a machine learning model for identifying loT devices in the network. In some embodiments, the machine learning model is simply retrieved from a storage or network location. That is to say, a machine learning model that has already been trained may be provided to the computer system performing the method 700. In other embodiments, as discussed in more detail in conjunction with figure 8 below, the machine learning model is generated (or trained) by the computer system performing the method 700. After obtaining the machine learning model, the method 700 proceeds to an operation 720.

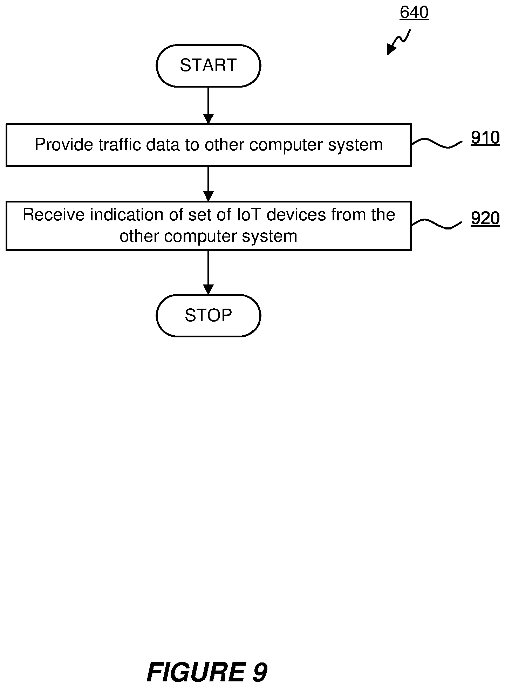

At operation 720, the method 700 communicates with a routing device for the network to identify a set of loT devices from traffic data gathered from the network by the routing device. As for the operation 640 performed by the method 600 described in conjunction with figure 6, there are a variety of different ways in which the set of loT devices 240 may be identified by communicating with the device, such as routing device 210, that is performing the method 600 within the network 200. These different ways are discussed further below in conjunction with the discussion of the embodiments illustrated in figures 9-13. Having identified a set of loT devices 240 collaboratively with the device, such as routing device 210, that is performing the method 600 within the network 200, the method 700 ends.

It will be appreciated that, in some embodiments, the operations 710 and 720 of method 700 are largely decoupled from each other. For example, in some embodiments, operation 720 may be performed in response to the initiation of communication by a remote device, such as the router 210, to collaboratively identify IoT devices 240 in the network 200 and may use the model that has been retrieved by operation 710 at some point prior to the initiation of communication by the remote device. Similarly, in some embodiments, operation 720 of method 700 communicates with multiple different routing devices 210, potentially substantially in parallel, in order to collaboratively identify respective sets of loT devices in each network.

Figure 8 is a flowchart representation of a method 800 of protecting a computer network, such as network 200, in accordance with some embodiments of the present invention. The method 800 is the same as that described above in relation to figure 7, except that the first operation 710 has been expanded to discuss one of the ways in which the machine learning model may be obtained.

At an operation 810, the method 800 receives traffic data for one or more networks. For example, the traffic data may be provided by respective router devices 210 operating in the one or more networks. The networks from which the traffic data is received need not necessarily be networks in which embodiments of the invention are operating to protect the network. Of course, in some embodiments, the traffic data may be exclusively received from networks in which embodiments of the invention are operating to protect the network. In other embodiments, the traffic data may be exclusively received from networks in which embodiments of the invention are not operating to protect the network. In yet other embodiments, the traffic data may be received from both types of network.

At an operation 820, the method 800 generates a machine learning model using a machine learning algorithm and a training set of data obtained from the received traffic data. Whilst any type of unsupervised machine learning algorithm may be used. In some preferred embodiments, the machine learning algorithm is a heavy weight algorithm, such as a deep learning or text classification. Such heavy weight machine learning algorithms may take full advantage of the additional resources typically available on the other computer system to achieve a high level of classification accuracy for the generated model.

Again, it will be appreciated that the operations 810 and 820 may be performed substantially independently from each other. In particular, the method 800 may continually (or periodically or sporadically) receive traffic data for one or more networks and may periodically (or sporadically) train or re-train the machine learning model based on a training set of data derived from the traffic data that has been received up until that point. The timing (and frequency) for the training of the machine learning model can be completely independent of the receipt of the traffic data.

Although not illustrated in figure 8, in some embodiments, the method 800 provides the machine learning model to a computer system 220 in a network 200 to enable that computer system 220 to use the model to identify loT devices 240 within the network 200 as described in conjunction with figures 3 and 4. This can allow those computer systems 220 to benefit from the computational resources of the other computer system during the learning process which can enable heavy-weight algorithms to be used to train the model, which will typically yield a model wither a higher level of classification accuracy than those yielded by light-weight learning algorithms. Additionally, the other computer system can make use of traffic data from a large number of networks to train the model. This means that the model will be able to account for a wider variety of devices than are necessarily present in any given network. Therefore, the machine learning model developed by the other computer system may be more adaptable and able to correctly classify new devices that are introduced to a network.

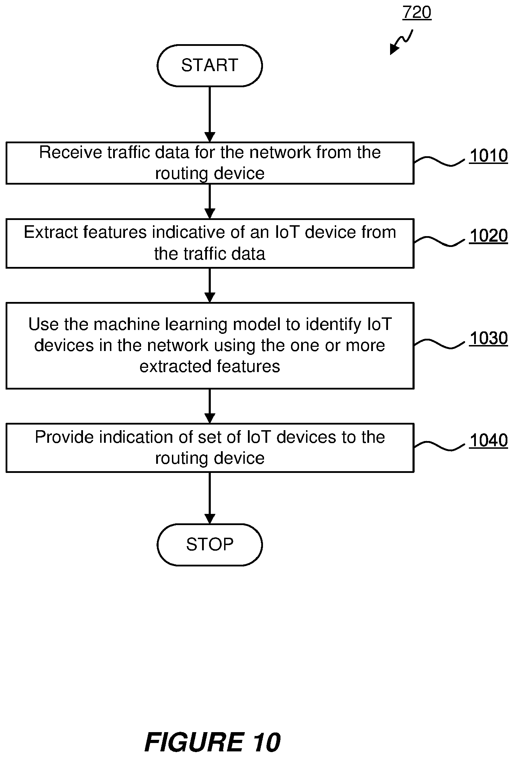

Figure 9 is a flowchart representation of the steps taken by a device, such as the router device 210, to communicate with another computer system to identify a set of loT devices 240 in the network 200, in accordance with some embodiments of the present invention. In such embodiments, these steps are performed as part of the operation 640 of method 600. The steps of figure 9 will be discussed in conjunction with figure 10, which is a flowchart representation of the corresponding steps that are taken by the other computer system, such as server 520 (or cloud service 530), in accordance with these embodiments of the present invention. In such embodiments, these steps are performed by the other computer system as part of the operation 720 of method 700.

At a step 910, the operation 640 (performed, for example, by router device 210) provides the traffic data that was gathered at operation 310 to the other computer system. This traffic data is received by the other computer system at a step 1010 of operation 720. In some embodiments, the traffic data that is received may be stored for use in training or re-training machine learning models in the future (i.e. the data used in operation 810 of the method illustrated by figure 8 may be sourced (either in part or entirely) from the data received at step 1010).

At a step 1020, the operation 720 performed by the other computer system extracts one or more features that are indicative of an loT device from the traffic data.

At a step 1030, the operation 720 performed by the other computer system uses the machine learning model obtained in operation 710 to identify loT devices 240 in the network 200 based on the extracted features.

At a step 1040, the operation 720 performed by the other computer system provides the indication of the set of loT devices back to the device 220, such as routing device 210. This indication is received at a step 920 of the operation 640 (performed, for example, by router device 210).

By providing the traffic data to the other computer system to process, the steps illustrated in figures 9 and 10 can reduce the amount of processing that needs to be performed by the device 220, such as the router device 210, in the network 200 in order to identify loT devices and protect the network in accordance with embodiments of the invention. This can enable embodiments of the invention to be performed using relatively low powered devices.

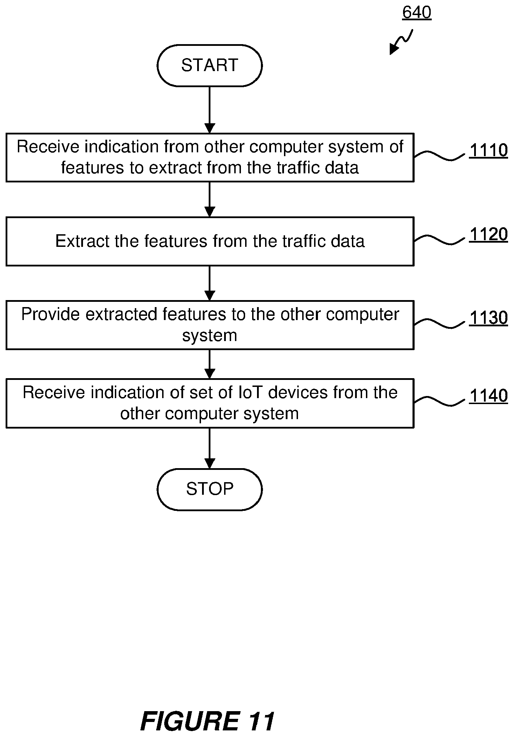

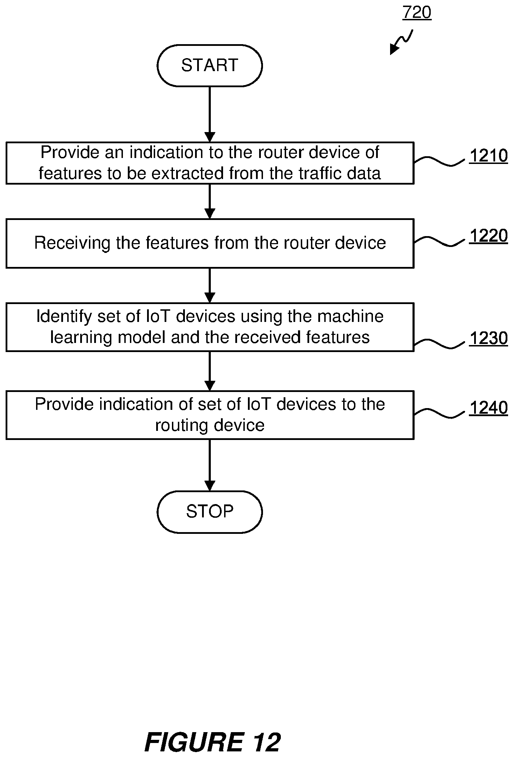

Figure 11 is a flowchart representation of the steps taken by a device, such as the router device 210, to communicate with another computer system to identify a set of loT devices 240 in the network 200, in accordance with some embodiments of the present invention. In such embodiments, these steps are performed as part of the operation 640 of method 600. The steps of figure 11 will be discussed in conjunction with figure 12, which is a flowchart representation of the corresponding steps that are taken by the other computer system, such as server 520 (or cloud service 530), in accordance with these embodiments of the present invention. In such embodiments, these steps are performed by the other computer system as part of the operation 720 of method 700.

At a step 1210, the operation 720 performed by the other computer system provides an indication to the routing device of one or more features that are indicative of an loT device. These features are the features that are required as inputs to the machine learning model obtained in operation 710. This indication is received by at a step 1110 of operation 640 (performed, for example, by router device 210).

At a step 1120, the operation 640 (performed, for example, by router device 210) extracts the features, as indicated by the other computer system, from the traffic data.

At a step 1130, the operation 640 provides the extracted features to the other computer system, which receives them at a step 1220 of operation 720.

At a step 1230, the operation 720 performed by the other computer system uses the machine learning model and the received features to identify the set of loT devices.

At a step 1240, the operation 720 performed by the other computer system provides an indication of the set of loT devices to the device 220, such as router device 210, in the network. This is received at step 1140 of operation 640.

By extracting the features on the device 220 within the network 200 the steps illustrated in figures 11 and 12 can reduce the amount of data that needs to be transmitted to the other computer system and can thereby reduce bandwidth consumption and enhance privacy.

Although in this description of the invention, the machine learning model that is used is described as classifying a device as being an loT device (or not), it will be appreciated that loT devices may be further subcategorised. For example, some loT devices are entirely concerned with the provision of information from sensors embedded in the object and/or its environment. Other loT devices are entirely concerned with controlling the object and/or its environment using embedded actuators. Yet other loT devices may provide a combination of both. Some loT devices enable a user to interact with the device from a conventional computer system, such as a laptop, tablet or mobile phone to receive the sensed data or control the object. Alternatively, some loT devices only communicate with other computer systems, such as other loT devices or cloud services to provide data about the object or receive input for controlling the object. Yet other loT devices sense user input through interaction with the object (such as by pushing buttons on the object) and use this input to control the object itself and/or another loT device. Each of these different type (or subcategory) of loT device is likely to exhibit its own unique set of characteristics and therefore be distinguishable from other types (or subcategories) of loT devices (in addition to be distinguishable from non-loT devices). Therefore, whilst in some embodiments the machine learning model is generally used to classify a device as being an loT device (or not), in other embodiments, the machine learning model may classify a device as being a specific type (or subcategory) of loT device (or not). In yet further embodiments, multiple machine learning models may be used, each tailored to one or more respective subcategories of loT device, to classify the devices as being an loT device belonging to one or more subcategory of loT device (or not). In such embodiments, the predetermined actions that are taken may vary between the different subcategories of loT device to account for the specific threats that are most likely to impact such devices. In some such embodiments, separate VLANs may be maintained for each subcategory of loT device.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example. Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention. It will be understood by those skilled in the art that, although the present invention has been described in relation to the above described example embodiments, the invention is not limited thereto and that there are many possible variations and modifications which fall within the scope of the invention. The scope of the present invention includes any novel features or combination of features disclosed herein. The applicant hereby gives notice that new claims may be formulated to such features or combination of features during prosecution of this application or of any such further applications derived therefrom. In particular, with reference to the appended claims, features from dependent claims may be combined with those of the independent claims and features from respective independent claims may be combined in any appropriate manner and not merely in the specific combinations enumerated in the claims, without departing from the scope defined by the appended set of claims.

## Claims

1. A computer implemented method (300) for protecting a network (200), the method comprising:
gathering (310) traffic data for the network;
**characterised in that** the method further comprises:
identifying (320) a set of loT devices (240) in the network based on output from a machine learning model for classifying devices as being either loT devices or non-loT devices, using features extracted from the traffic data that are indicative of an loT device, wherein the features comprise one or more common features of loT devices that are shared between multiple types of loT devices and which are distinct from the characteristics of non-IoT devices; and
causing (330) one or more predetermined actions to be taken in respect of the set of loT devices to protect the network.

2. The method of claim 1, wherein the method is performed by a router device of the network.

3. The method of any one of the preceding claims, wherein the traffic data comprises indications of one or more, or all, of:
successful network connections;
network connection attempts;
network connection terminations;
packet filtering operations;
network address translation operations;
port translation operations;
network session operations;
layer 2 connections;
access control operations;
authentication operations;
router advertisements;
network boot operations;
DNS requests and responses; and
HTTP requests and responses.

4. The method of any one of the preceding claims, wherein the method further comprises extracting one or more features that are indicative of an loT device from the traffic data.

5. The method of any one of the preceding claims, wherein the method further comprises generating the machine learning model using an unsupervised machine learning algorithm and a training set of data obtained from previously gathered traffic data for the network, preferably wherein the machine learning algorithm comprises a shallow learning algorithm.

6. The method of any one of claims 1 to 5, wherein the method further comprises communicating with another computer system (520) to identify the set of loT devices, wherein communicating with the other computer system to identify the set of loT devices preferably comprises:
receiving an indication from the other computer system of one or more features that are indicative of an loT device to be extracted from the traffic data;
extracting the one or more features from the traffic data;
providing the one or more features to the other computer system; and
receiving an indicating of the set of loT devices from the other computer system.

7. The method of claim 6, wherein the method further comprises:
generating a profile of the computational abilities of the routing device; and
determining that processing to identify loT devices in the network is to be performed using the processing resources provided by the other computer system based, at least in part, on the profile.

8. The method of any one of the preceding claims, wherein the one or more predetermined actions comprise one or more, or all, of:
placing the identified set of loT devices into a separate VLAN;
performing targeted patching of the identified set of loT devices; and/or
comparing the set of loT devices to a previously identified set of loT devices and raising an alarm if there are any differences.

9. A computer-implemented method (700) for protecting a network (200), the method executed by a computer system (520), the method comprising:
obtaining (710) a machine learning model for classifying devices as being either IoT devices or non-loT devices, in a network (200) using features extracted from traffic data for that network that are indicative of an loT device;
providing (1210) an indication to a router device (210) associated with a network (200) of one or more features that are indicative of an loT device to be extracted from the traffic data, wherein the features comprise one or more common features of loT devices that are shared between multiple types of loT devices and which are distinct from the characteristics of non-loT devices;
receiving (1220) the one or more features from the router device;
identifying (1230) a set of loT devices (240) in the network using the machine learning model and the one or more received features; and
providing (1240) an indication of the set of loT devices to the router device.

10. The method of claim 9, wherein the machine learning model is learnt from training data that is based on the traffic data from a plurality of networks.

11. The method of claim 9 or claim 10, wherein the machine learning algorithm comprises an unsupervised learning algorithm, preferably wherein the machine learning algorithm comprises a deep learning algorithm.

12. The method of claim 4 or any one of claims 9 to 11, wherein the one or more features relate to operational parameters of the network traffic, preferably wherein the one or more features comprise one or more, or all, of:
the number of packets of data transmitted by each device;
the number of packets of data received by each device;
the frequency with which traffic is transmitted by each device;
the frequency with which traffic is received by each device;
the average size of packets of data which are transmitted by each device;
the average size of packets of data which are received by each device;
the variance in the sizes of packets which are transmitted by each device;
the variance in the sizes of packets which are received by each device;
the ratio of traffic-in against traffic-out for each device;
the number of endpoints with which each device communicates;
the average duration of communication sessions for each device;
the typical times when communication sessions occur for each device; and/or
the times and duration that each device is online.

13. A computer system (100) for protecting a network (200) comprising a processor (120) and a memory (110) storing computer program code which, when executed by the processor cause the processor to perform a method according to any one of the preceding claims 1-8 when the processor is embodied in a router device (210), or to perform any of the preceding claims 9-12 when the processor is embodied in a computer system (520).

14. A system for protecting a network (200), the system comprising:
a plurality of router devices (210), each router device being associated with a respective network and being configured to perform a method according to any one of claims 1 to 8 to protect that network; and
a computer system (520) configured to perform a method according to any one of claims 9 to 12.

15. A computer program which, when executed by one or more processors (120), is arranged to cause the processor to carry out a method according to any one of claims 1 to 8 when the processor is embodied in a router device (210), or to carry out a method according to any one of the claims 9 to 12 when the processor is embodied in a computer system (520).

## Patentansprüche

1. Computerimplementiertes Verfahren (300) zum Schützen eines Netzwerks (200), wobei das Verfahren umfasst:
Sammeln (310) von Verkehrsdaten für das Netzwerk; **dadurch gekennzeichnet, dass** das Verfahren ferner umfasst:
Identifizieren (320) eines Satzes von IoT-Vorrichtungen (240) in dem Netzwerk auf der Grundlage einer Ausgabe eines Maschinenlernmodells zum Klassifizieren von Vorrichtungen als entweder IoT-Vorrichtungen oder Nicht-IoT-Vorrichtungen unter Verwendung von aus den Verkehrsdaten extrahierten Merkmalen, die eine IoT-Vorrichtung angeben, wobei die Merkmale ein oder mehrere gemeinsame Merkmale von IoT-Vorrichtungen, die von mehreren Arten von IoT-Vorrichtungen geteilt werden und die sich von den Charakteristika von Nicht-IoT-Vorrichtungen unterscheiden, umfassen; und
Veranlassen (330) einer oder mehrerer vorbestimmter Maßnahmen, die im Hinblick auf den Satz von IoT-Vorrichtungen ergriffen werden sollen, um das Netzwerk zu schützen.

2. Verfahren nach Anspruch 1, wobei das Verfahren durch eine Routervorrichtung des Netzwerks durchgeführt wird.

3. Verfahren nach einem der vorhergehenden Ansprüche, wobei die Verkehrsdaten Angaben von einem oder mehreren oder allen der Folgenden umfassen:
erfolgreiche Netzwerkverbindungen;
Netzwerkverbindungsversuche;
Netzwerkverbindungsabbrüche;
Paketfilterungsoperationen;
Netzwerkadressenübersetzungsoperationen;
Portübersetzungsoperationen;
Netzwerksitzungsoperationen;
Schicht-2-Verbindungen;
Zugangssteuerungsoperationen;
Authentifizierungsoperationen;
Routerankündigungen;
Netzwerk-Boot-Operationen;
DNS-Anfragen und Antworten; und
HTTP-Anfragen und Antworten.

4. Verfahren nach einem der vorhergehenden Ansprüche, wobei das Verfahren ferner Extrahieren eines oder mehrerer Merkmale, die eine IoT-Vorrichtung angeben, aus den Verkehrsdaten umfasst.

5. Verfahren nach einem der vorhergehenden Ansprüche, wobei das Verfahren ferner Erzeugen des Maschinenlernmodells unter Verwendung eines unüberwachten Maschinenlernalgorithmus und eines Trainingsdatensatzes, der aus zuvor gesammelten Verkehrsdaten für das Netzwerk erhalten wurde, umfasst, wobei der Maschinenlernalgorithmus bevorzugt einen flachen Lernalgorithmus umfasst.

6. Verfahren nach einem der Ansprüche 1 bis 5, wobei das Verfahren ferner Kommunizieren mit einem anderen Computersystem (520) zum Identifizieren des Satzes von IoT-Vorrichtungen umfasst, wobei Kommunizieren mit dem anderen Computersystem zum Identifizieren des Satzes von IoT-Vorrichtungen bevorzugt Folgendes umfasst:
Empfangen einer Angabe von dem anderen Computersystem von einem oder mehreren Merkmalen, die eine IoT-Vorrichtung angeben, die aus den Verkehrsdaten extrahiert werden sollen;
Extrahieren eines oder mehrerer Merkmale aus den Verkehrsdaten;
Liefern des einen oder der mehreren Merkmale an das andere Computersystem; und
Empfangen eines Angebens des Satzes von IoT-Vorrichtungen von dem anderen Computersystem.

7. Verfahren nach Anspruch 6, wobei das Verfahren ferner umfasst:
Erzeugen eines Profils der Rechenfähigkeiten der Routingvorrichtung; und
Bestimmen, dass Verarbeiten zum Identifizieren von IoT-Vorrichtungen in dem Netzwerk unter Verwendung der durch das andere Computersystem bereitgestellten Verarbeitungsressourcen, zumindest teilweise auf der Grundlage des Profils, durchgeführt werden soll.

8. Verfahren nach einem der vorhergehenden Ansprüche, wobei die eine oder die mehreren vorbestimmten Maßnahmen eine oder mehrere oder alle umfassen von:
Platzieren des identifizierten Satzes von IoT-Vorrichtungen in ein separates VLAN;
Durchführen von gezieltem Patching des identifizierten Satzes von IoT-Vorrichtungen; und/oder
Vergleichen des Satzes von IoT-Vorrichtungen mit einem zuvor identifizierten Satz von IoT-Vorrichtungen und Auslösen eines Alarms, wenn es irgendwelche Unterschiede gibt.

9. Computerimplementiertes Verfahren (700) zum Schützen eines Netzwerks (200), wobei das Verfahren durch ein Computersystem (520) ausgeführt wird, wobei das Verfahren umfasst:
Erhalten (710) eines Maschinenlernmodells zum Klassifizieren von Vorrichtungen als entweder IoT-Vorrichtungen oder Nicht-IoT-Vorrichtungen in einem Netzwerk (200) unter Verwendung von aus Verkehrsdaten für das Netzwerk extrahierten Merkmalen, die eine IoT-Vorrichtung angeben;
Liefern (1210) einer Angabe an eine Routervorrichtung (210), assoziiert mit einem Netzwerk (200), von einem oder mehreren Merkmalen, die eine IoT-Vorrichtung angeben, die aus den Verkehrsdaten extrahiert werden sollen, wobei die Merkmale ein oder gemeinsame Merkmale von IoT-Vorrichtungen, die von mehreren Arten von IoT-Vorrichtungen geteilt werden und die sich von den Charakteristika von Nicht-IoT-Vorrichtungen unterscheiden, umfassen;
Empfangen (1220) des einen oder der mehreren Merkmale von der Routervorrichtung;
Identifizieren (1230) eines Satzes von IoT-Vorrichtungen (240) in dem Netzwerk unter Verwendung des Maschinenlernmodells und des einen oder der mehreren empfangenen Merkmale; und
Liefern (1240) einer Angabe des Satzes von IoT-Vorrichtungen an die Routervorrichtung.

10. Verfahren nach Anspruch 9, wobei das Maschinenlernmodell aus Trainingsdaten gelernt wird, die auf den Verkehrsdaten von einer Vielzahl von Netzwerken basieren.

11. Verfahren nach Anspruch 9 oder Anspruch 10, wobei der Maschinenlernalgorithmus einen unüberwachten Lernalgorithmus umfasst, wobei der Maschinenlernalgorithmus bevorzugt einen tiefen Lernalgorithmus umfasst.

12. Verfahren nach Anspruch 4 oder einem der Ansprüche 9 bis 11, wobei sich das eine oder die mehreren Merkmale auf Betriebsparameter des Netzwerkverkehrs beziehen, wobei das eine oder die mehreren Merkmale eines oder mehrere oder alle umfassen von:
der Anzahl von Datenpaketen, die durch jede Vorrichtung übertragen wurden;
der Anzahl von Datenpaketen, die von jeder Vorrichtung empfangen wurden;
der Frequenz, mit der Verkehr durch jede Vorrichtung übertragen wird;
der Frequenz, mit der Verkehr von jeder Vorrichtung empfangen wird;
der Durchschnittsgröße von Datenpaketen, die durch jede Vorrichtung übertragen werden;
der Durchschnittsgröße von Datenpaketen, die von jeder Vorrichtung empfangen werden;
der Varianz bei der Größe von Paketen, die durch jede Vorrichtung übertragen werden;
der Varianz bei der Größe von Paketen, die von jeder Vorrichtung empfangen werden;
dem Verhältnis von eingehendem Verkehr gegen ausgehendem Verkehr für jede Vorrichtung;
der Anzahl von Endpunkten, mit denen jede Vorrichtung kommuniziert;
der Durchschnittsdauer von Kommunikationssitzungen für jede Vorrichtung;
der typischen Zeiten, zu denen Kommunikationssitzungen für jede Vorrichtung auftreten; und/oder
der Zeiten und der Dauer, für die jede Vorrichtung online ist.

13. Computersystem (100) zum Schützen eines Netzwerks (200), umfassend einen Prozessor (120) und einen Arbeitsspeicher (110), der Computerprogrammcode speichert, der bei Ausführung durch den Prozessor den Prozessor veranlasst zum Durchführen eines Verfahrens nach einem der vorhergehenden Ansprüche 1-8, wenn der Prozessor in einer Routervorrichtung (210) umgesetzt ist, oder zum Durchführen eines der vorhergehenden Ansprüche 9-12, wenn der Prozessor in einem Computersystem (520) umgesetzt ist.

14. System zum Schützen eines Netzwerks (200), wobei das System umfasst:
eine Vielzahl von Routervorrichtungen (210), wobei jeder Router mit einem jeweiligen Netzwerk assoziiert ist und ausgelegt ist zum Durchführen eines Verfahrens nach einem der Ansprüche 1 bis 8, um dieses Netzwerk zu schützen; und
ein Computersystem (520), ausgelegt zum Durchführen eines Verfahrens nach einem der Ansprüche 9 bis 12.

15. Computerprogramm, das bei Ausführung durch einen oder mehrere Prozessoren (120) eingerichtet ist zum Veranlassen des Prozessors, ein Verfahren nach einem der Ansprüche 1 bis 8 auszuführen, wenn der Prozessor in einer Routervorrichtung (210) umgesetzt ist, oder ein Verfahren nach einem der Ansprüche 9-12 auszuführen, wenn der Prozessor in einem Computersystem (520) umgesetzt ist.

## Revendications

1. Procédé (300) mis en œuvre par ordinateur pour protéger un réseau (200), le procédé comprenant :
la collecte (310) de données de trafic pour le réseau ;
**caractérisé en ce que** le procédé comprend en outre :
l'identification (320) d'un ensemble de dispositifs IoT (240) dans le réseau en fonction d'une sortie d'un modèle d'apprentissage automatique pour classer des dispositifs en tant que dispositifs IoT ou dispositifs non-IoT, à l'aide de fonctionnalités extraites des données de trafic qui sont indicatives d'un dispositif IoT, dans lequel les fonctionnalités comprennent une ou plusieurs fonctionnalités communes de dispositifs IoT qui sont partagées entre de multiples types de dispositifs IoT et qui sont distinctes des caractéristiques de dispositifs non IoT ; et
l'action d'amener (330) la réalisation d'une ou plusieurs actions prédéterminées relativement à l'ensemble de dispositifs IoT pour protéger le réseau.

2. Procédé selon la revendication 1, le procédé étant réalisé par un dispositif routeur du réseau.

3. Procédé selon l'une quelconque des revendications précédentes, dans lequel les données de trafic comprennent une ou plusieurs des indications suivantes, ou toutes :
les connexions réseau réussies ;
les tentatives de connexion réseau ;
les terminaisons de connexion réseau ;
les opérations de filtrage de paquets ;
les opérations de traduction d'adresses réseau ;
les opérations de traduction de ports ;
les opérations de session réseau ;
les connexions de couche 2 ;
les opérations de commande d'accès ;
les opérations d'authentification ;
les annonces de routeur ;
les opérations d'amorçage de réseau ;
les requêtes et réponses DNS ; et
les requêtes et réponses HTTP.

4. Procédé selon l'une quelconque des revendications précédentes, le procédé comprenant en outre l'extraction d'une ou plusieurs fonctionnalités qui sont indicatives d'un dispositif IOT à partir des données de trafic

5. Procédé selon l'une quelconque des revendications précédentes, le procédé comprenant en outre la génération du modèle d'apprentissage automatique à l'aide d'un algorithme d'apprentissage automatique non supervisé et d'un ensemble d'entraînement de données obtenu à partir de données de trafic précédemment collectées pour le réseau, de préférence dans lequel l'algorithme d'apprentissage automatique comprend un algorithme d'apprentissage superficiel.

6. Procédé selon l'une quelconque des revendications 1 à 5, le procédé comprenant en outre une communication avec un autre système informatique (520) pour identifier l'ensemble de dispositifs IoT, dans lequel la communication avec l'autre système informatique pour identifier l'ensemble de dispositifs IoT comprend de préférence :
la réception à partir de l'autre système informatique d'une indication d'une ou plusieurs fonctionnalités indiquant un dispositif IoT à extraire des données de trafic ;
l'extraction des une ou plusieurs fonctionnalités des données de trafic ;
la fourniture des une ou plusieurs fonctionnalités à l'autre système informatique ; et
la réception d'une indication de l'ensemble de dispositifs IoT à partir de l'autre système informatique.

7. Procédé selon la revendication 6, le procédé comprenant en outre :
la génération d'un profil des capacités de calcul du dispositif de routage ; et
la détermination qu'un traitement pour identifier les dispositifs IoT dans le réseau doit être réalisé en utilisant les ressources de traitement fournies par l'autre système informatique en fonction, au moins en partie, du profil.

8. Procédé selon l'une quelconque des revendications précédentes, dans lequel les une ou plusieurs actions prédéterminées comprennent une ou plusieurs des actions suivantes, ou toutes :
le placement de l'ensemble identifié de dispositifs IoT dans un VLAN séparé ;
la réalisation d'une correction ciblée de l'ensemble identifié de dispositifs IoT ; et/ou
la comparaison de l'ensemble de dispositifs IoT à un ensemble de dispositifs IoT précédemment identifié et le déclenchement d'une alarme en cas de différences.

9. Procédé mis en œuvre par ordinateur (700) pour protéger un réseau (200), le procédé étant exécuté par un système informatique (520), le procédé comprenant :
l'obtention (710) d'un modèle d'apprentissage automatique pour classer des dispositifs en tant que dispositifs IoT ou dispositifs non-IoT dans un réseau (200) en utilisant des fonctionnalités extraites des données de trafic pour ce réseau qui sont indicatives d'un dispositif IoT ;
la fourniture (1210) d'une indication à un dispositif routeur (210) associé à un réseau (200) d'une ou plusieurs fonctionnalités qui sont indicatives d'un dispositif IoT à extraire à partir des données de trafic, dans lequel les fonctionnalités comprennent une ou plusieurs fonctionnalités communes de dispositifs IoT qui sont partagées entre de multiples types de dispositifs IoT et qui sont distinctes des caractéristiques de dispositifs non IoT ;
la réception (1220) des une ou plusieurs fonctionnalités à partir du dispositif routeur ;
l'identification (1230) d'un ensemble de dispositifs IoT (240) dans le réseau à l'aide du modèle d'apprentissage automatique et des une ou plusieurs fonctionnalités reçues ; et
la fourniture (1240) d'une indication de l'ensemble de dispositifs IoT au dispositif routeur.

10. Procédé selon la revendication 9, dans lequel le modèle d'apprentissage automatique est appris à partir de données d'entraînement qui sont basées sur les données de trafic provenant d'une pluralité de réseaux.

11. Procédé selon la revendication 9 ou la revendication 10, dans lequel l'algorithme d'apprentissage automatique comprend un algorithme d'apprentissage non supervisé, de préférence dans lequel l'algorithme d'apprentissage automatique comprend un algorithme d'apprentissage profond.

12. Procédé selon la revendication 4 ou l'une quelconque des revendications 9 à 11, dans lequel les une ou plusieurs fonctionnalités se rapportent à des paramètres opérationnels du trafic réseau, de préférence dans lequel les une ou plusieurs fonctionnalités comprennent une ou plusieurs des fonctionnalités suivantes, ou toutes :
le nombre de paquets de données transmis par chaque dispositif ;
le nombre de paquets de données reçus par chaque dispositif ;
la fréquence à laquelle le trafic est transmis par chaque dispositif ;
la fréquence à laquelle le trafic est reçu par chaque dispositif ;
la taille moyenne des paquets de données transmis par chaque dispositif ;
la taille moyenne des paquets de données reçus par chaque dispositif ;
la variance de taille des paquets transmis par chaque dispositif ;
la variance de taille des paquets reçus par chaque dispositif ;
le rapport entre le trafic entrant et le trafic sortant pour chaque dispositif ;
le nombre de points de terminaison avec lesquels chaque dispositif communique ;
la durée moyenne des sessions de communication pour chaque dispositif ;
les heures typiques auxquelles les sessions de communication se produisent pour chaque dispositif ; et/ou
les heures et la durée de connexion de chaque dispositif.

13. Système informatique (100) pour protéger un réseau (200) comprenant un processeur (120) et une mémoire (10) stockant un code de programme informatique qui, lorsqu'il est exécuté par le processeur, amènent le processeur à réaliser un procédé selon l'une quelconque des revendications précédentes 1 à 8 quand le processeur est incorporé à un dispositif routeur (210) ou réaliser l'une quelconque des revendications 9 à 12 quand le processeur est incorporé à un système informatique (520).

14. Système pour protéger un réseau (200), le système comprenant :
une pluralité de dispositifs routeurs (210), chaque dispositif routeur étant associé à un réseau respectif et étant configuré pour réaliser un procédé selon l'une quelconque des revendications 1 à 8 afin de protéger ce réseau ; et
un système informatique (520) configuré pour réaliser un procédé selon l'une quelconque des revendications 9 à 12.

15. Programme d'ordinateur qui, à son exécution par un ou plusieurs processeurs (120), est conçu pour amener le processeur à entreprendre un procédé selon l'une quelconque des revendications 1 to 8 quand le processeur est incorporé à un dispositif routeur (210) ou entreprendre l'une quelconque des revendications 9 à 12 quand le processeur est incorporé à un système informatique (520).
